# EUROPEAN PATENT APPLICATION

(11) **EP 0 973 331 A1**
(43) Date of publication of application: **19.01.2000**
(21) Application number: 99112906.5
(22) Date of filing: 05.07.1999
(51) Int. Cl.: H04N 5/57, H04N 5/66, G09G 3/28, G09G 3/22

(54) **Arrangement for regulating the luminance**

(30) Priority: 17.07.1998 DE 19832261
(71) Applicant: DEUTSCHE THOMSON-BRANDT GMBH, 78048 Villingen-Schwenningen (DE)
(72) Inventor: Kimmelmann, Stefan, 78073 Bad Dürrheim (DE); Rilly, Gerard, 78089 Unterkirnach (DE)

(57) **Abstract**

The arrangement (5-8) for regulating the luminance according to the invention subdivides the picture - to be displayed - of a picture reproduction apparatus into blocks, calculates an averaged light power for each of these blocks, and utilizes these values for regulating the luminance. The picture is preferably subdivided into rectangular blocks. The underlying idea in this case is that white areas in television broadcasts frequently relate only to local, non-moving regions, often rectangular areas, of a picture, with the result that luminance regulation is expediently based on rectangular blocks of a picture, in other words not on line-like monitoring or monitoring of a frame. If a maximum light power is exceeded in one of these blocks, then the luminance for the entire picture is regulated downwards by the arrangement.

In the case of a plasma display, the light power can, for example, be averaged over an interval of one second to a number of seconds, with the result that this display is not thermally overloaded by white areas. This regulation makes it possible to achieve greater picture brightness, since local overloading of the display is identified in a targeted manner.

The invention essentially relates to television sets, but can also be applied to picture reproduction apparatuses appertaining to the computer sector or other graphical sectors.

## Description

The invention is based on an arrangement for regulating the luminance for a picture reproduction apparatus having a video processor and a screen, such as, for example, a television set with a plasma display.

In the case of apparatuses of this type, it is known to provide luminance limiting, since, on the one hand, white areas or white objects of the picture should, if necessary, be displayed very brightly and, on the other hand, the screen and the associated voltage supply should not be overloaded. The patent application DE 19818387, which was published before the priority date, discloses, by way of example, an arrangement for regulating the luminance which contains fast regulation, in order not to overload the voltage supply, and slow regulation, which is used for thermal protection of the screen.

The object of the present invention is to specify an improved arrangement and a method for regulating the luminance for a picture reproduction apparatus which enable high contrast and brightness of the picture, without any components of the picture reproduction apparatus being overloaded.

This object is achieved by means of the features of the invention which are specified in Claims 1 and 8. Advantageous developments of the invention are specified in the subclaims.

The arrangement for regulating the luminance according to the invention subdivides the picture - to be displayed - of a picture reproduction apparatus into blocks, calculates an averaged light power for each of these blocks, and utilizes these values for regulating the luminance. The displayed picture is preferably subdivided into rectangular blocks. The underlying idea in this case is that white areas in television broadcasts frequently relate only to local, non-moving regions, often rectangular areas, of a picture, with the result that luminance regulation is expediently based on rectangular blocks of a picture, in other words not on line-like monitoring or monitoring of a frame. If a maximum light power is exceeded in one of these blocks, then the luminance for the entire picture is regulated downwards by the arrangement. The light power, which leads to heating of the display, can be determined by way of the product "luminance times time".

A block in this case comprises a plurality of picture lines in the vertical direction, but not the complete line horizontally. The displayed picture is preferably subdivided into rectangular or else square blocks oriented by horizontal picture lines or vertical lines.

In the case of a plasma display, the light power can, for example, be averaged over an interval of one second to a number of seconds, with the result that this display is not thermally overloaded by white areas. This regulation makes it possible to achieve greater picture brightness, since local overloading of the display is identified in a targeted manner.

The invention essentially relates to television sets, but can also be applied to picture reproduction apparatuses appertaining to the computer sector or other graphical sectors.

The invention is explained in more detail below by way of example with reference to schematic drawings, in which:
Figure 1 shows a screen subdivided into rectangular blocks,
Figure 2 shows an arrangement for regulating the luminance for a picture reproduction apparatus.

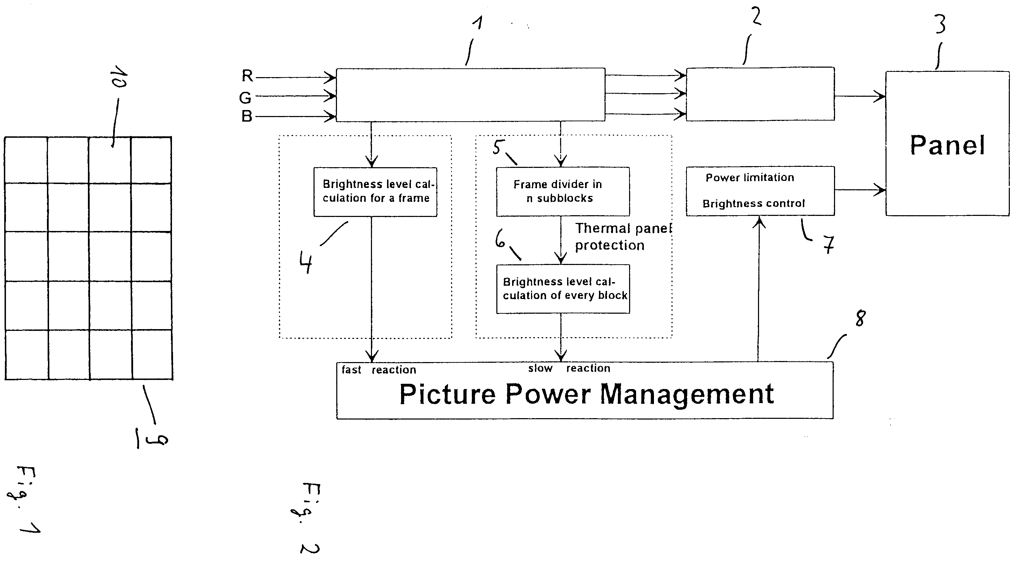

In Figure 1, a displayed picture 9 or the screen - generating the picture - of a picture reproduction apparatus, for example a plasma display, is subdivided into 4 x 5 blocks 10. The luminance is monitored for each of these blocks 10, with the result that local regions of the screen are not thermally overloaded. The said screen can thereby be operated with higher picture brightness without any risk, as a result of which the contrast of the displayed picture is increased. This luminance regulation makes significantly better use of the display possibilities of a screen than regulation based on one or more picture lines or on a frame.

The displayed picture is preferably subdivided into rectangular or else square blocks the orientation of which is effected by horizontal picture lines or vertical lines. A block in this case comprises a plurality of picture lines vertically, but not the complete line horizontally. The luminance of the individual blocks can be calculated both in analogue form and digitally.

Figure 2 illustrates an arrangement 5-8 for regulating the luminance for a picture reproduction apparatus, a plasma television set in this exemplary embodiment, having a video processor and a screen 3. In the video processor, the signal to be displayed is decoded into the RGB signals, corresponding to the colours Red, Green and Blue, which make up the colour picture to be displayed. In a frame store 1 of the video processor, these signals are buffer-stored for each frame or for each field and subsequently conditioned in a picture-signal coder 2 for a plasma display 3. The voltage supply required for the display 3 as well as further components are assumed to be known.

The arrangement 5-8 for regulating the luminance takes the frame store 1 as a starting point and subdivides the video signals in a first calculation unit 5 into n x m blocks, for example 4 x 5 blocks. The light power is calculated for each of these blocks in a downstream second calculation unit 6 and subsequently averaged over time, in a picture power monitoring arrangement 8, with a time constant of about one second to a number of seconds. The time constant is coordinated with the display used, with the result that local regions of this display are not thermally overloaded.

In this exemplary embodiment, a luminance monitoring arrangement 4 is additionally connected in parallel with this block-by-block luminance monitoring using the units 5 and 6, which luminance monitoring arrangement 4 calculates the luminance for a frame or a field and is used by the picture power monitoring arrangement 8 for fast regulation of the luminance with a regulating constant in the milliseconds range. The fast regulation of the luminance is coordinated with the voltage supply used, with the result that the latter is not overloaded.

Power limitation and brightness control 7, which drive the display 3, are connected downstream of the picture power monitoring arrangement 8. The luminance over the entire picture is regulated by virtue of the block-by-block acquisition of the light power. The luminance regulation relates, in particular, to white areas which can thereby be displayed momentarily with a very bright white, the so-called peak white. The width of a block 10 is chosen in dependence on the thermal distribution in the display 3. The luminance regulation may also include, in particular, the luminance of adjacent blocks in the regulation, since adjacent blocks mutually influence one another and a block with a high light power has no heat dissipation into an adjacent block if the latter likewise has a high light power.

Since the luminance, averaged over an entire picture, is considerably lower than that of a white area, the luminance regulation thereby enables corresponding regions of a picture to be reproduced momentarily with a very bright white, which leads to better contrast of the picture. If the maximum permissible value of the light power for a block 10 is exceeded, then the luminance is slowly regulated downwards.

## Claims

1. Arrangement for regulating the luminance for a picture reproduction apparatus having a video processor and a screen, **characterized** in that the arrangement (5-8) subdivides the picture (9) to be displayed into blocks (10), calculates an averaged light power for each of these blocks, and utilizes this value for regulating the luminance.

2. Arrangement according to Claim 1, **characterized** in that a block (10) comprises a plurality of picture lines in the vertical direction and is shorter than one picture line in the horizontal direction.

3. Arrangement according to Claim 2, **characterized** in that the picture (9) to be displayed is subdivided into rectangular blocks (10), preferably into more than eight blocks.

4. Arrangement according to Claim 1, 2 or 3, **characterized** in that the averaging over the light power is effected over an interval of one second to a number of seconds.

5. Arrangement according to one of the preceding claims, **characterized** in that the light power per block (10) is limited to a maximum value, for the purpose of thermal monitoring of the screen (3) and in that the arrangement (5-8) regulates the light power for the entire picture (9) in the event of this maximum value being exceeded.

6. Arrangement according to Claim 5, **characterized** in that white areas are displayed with a high picture power, and in that the arrangement (5-8) limits the picture power of the screen (3) only when the maximum value of the light power for a block is exceeded.

7. Arrangement according to either of Claims 5 and 6, **characterized** in that the arrangement (5-8) for regulating the luminance includes the light power of adjacent blocks (10) in the regulation.

8. Method for regulating the luminance for a picture reproduction apparatus having a video processor and a screen, **characterized** in that the picture (9) to be displayed is subdivided into blocks (10) by an arrangement (5-8), an averaged light power is calculated for each of these blocks, and this value is utilized for slowly regulating the luminance.
